# EUROPÄISCHE PATENTSCHRIFT

(11) **EP 3 752 881 B1**
(45) Veröffentlichungstag und Bekanntmachung des Hinweises auf die Patenterteilung: **30.04.2025**
(21) Anmeldenummer: 19711237.8
(22) Anmeldetag: 12.02.2019
(51) Int. Cl.: G02B 27/01, G05D 1/00, G06F 3/00, H04N 5/00, H04W 4/00, B64C 39/02, G06Q 10/00, G06T 7/00, G08G 5/00, B64U 101/20, G06T 7/73, B64U 101/30

(54) **SYSTEM ZUR DARSTELLUNG UND IDENTIFIKATION VON MARKERN EINER VERÄNDERBAREN GEOMETRISCHEN ABBILDUNG**
SYSTEM FOR PRESENTING AND IDENTIFYING MARKERS OF A CHANGEABLE GEOMETRIC IMAGE
SYSTÈME DE REPRÉSENTATION ET D'IDENTIFICATION DE MARQUEURS D'UNE IMAGE GÉOMÉTRIQUE MODIFIABLE

(30) Priorität: 13.02.2018 AT 5002618 U
(43) Veröffentlichungstag der Anmeldung: 23.12.2020
(73) Patentinhaber: Ars Electronica Linz GmbH & Co KG, 4040 Linz (AT)
(72) Erfinder: HÖRTNER, Horst, 4115 Kleinzell (AT)
(74) Vertreter: Röggla, Harald
(86) Internationale Anmeldenummer: PCT/AT2019/060050
(87) Internationale Veröffentlichungsnummer: WO 2019/157543

(56) Entgegenhaltungen:
- US-A1- 2010 197 390
- US-A1- 2017 083 748
- US-A1- 2017 083 748
- US-A1- 2017 256 065
- US-A1- 2017 256 065
- US-A1- 2018 033 111
- US-A1- 2018 033 206
- US-A1- 2018 033 206

## Beschreibung

Die Erfindung betrifft ein System zur Identifikation von Markern einer geometrischen Abbildung im Raum, aufweisend zumindest ein tragbares Gerät mit einer Aufnahmeeinheit, die zur Aufnahme der Abbildung ausgebildet ist, und einer elektronischen Datenverarbeitungseinheit, die zur Identifikation der Marker und zur Verarbeitung der Aufnahmen anhand der identifizierten Marker ausgebildet ist.

Die US 2006/0235614 A1 offenbart eine aus dem Stand der Technik bekannte Vorrichtung und ein Verfahren zur Identifikation von Himmelskörpern. Mit der Vorrichtung können beispielsweise digitale Abbildungen des Nachthimmels erzeugt werden. Dabei werden markante Lichtpunkte, insbesondere Gestirne, als Marker erfasst und anhand ihrer geometrischen Beziehung untereinander mit in einer Datenbank gespeicherten Abbildungen verglichen. Himmelskörper können so identifiziert und über eine Anzeige an eine Benutzer abgegeben werden. Ein Nachteil der Vorrichtung ist dabei unter anderem, dass bei falsch ermittelter Ausrichtung ein falsches Ergebnis ermittelt werden kann.

Ähnliche Verfahren können mithilfe eines Softwareprodukts für Smartphones ausgeführt werden, wobei hierbei üblicherweise gar keine Aufnahmen des Nachthimmels gemacht werden, sondern lediglich die in einer Datenbank gespeicherten Himmelskörper in Abhängigkeit der geographischen Position und der Ausrichtung des Smartphones auf ein Display des Smartphones abgegeben werden. Ein Nachteil dieser Verfahren ist dabei unter anderem, dass bei falsch ermittelter geographischer Position und/ oder Ausrichtung unweigerlich ein falsches Ergebnis angezeigt wird.

Die US 2017/083748 A1 offenbart ein System zur Darstellung und Identifikation von Markern einer geometrischen Abbildung im Raum, aufweisend zumindest ein tragbares Gerät mit einer Aufnahmeeinheit, die zur Aufnahme der Abbildung ausgebildet ist, und einer elektronischen Datenverarbeitungseinheit, die zur Identifikation der Marker und zur Verarbeitung der Aufnahmen anhand der identifizierten Marker ausgebildet ist.

Der größte Nachteil der aus dem Stand der Technik bekannten Vorrichtungen und Verfahren ist jedoch, dass sie auf die Identifikation und Abbildung von Himmelskörpern beschränkt sind. Dies limitiert zum einen ihre Einsetzbarkeit für kommerzielle Zwecke, und zum anderen ihren Nutzen für mögliche Benutzer.

Der Erfindung liegt die Aufgabe zugrunde, ein verbessertes System zur Darstellung und Identifikation von Markern einer geometrischen Abbildung im Raum bereitzustellen, das die aus dem Stand der Technik bekannten Nachteile zumindest vermindert und insbesondere die kommerzielle Einsetzbarkeit und den Nutzen für mögliche Benutzer verbessert.

Erfindungsgemäß wird diese Aufgabenstellung dadurch gelöst, dass ein System zur Darstellung und Identifikation von Markern einer geometrischen Abbildung im Raum gemäß Anspruch 1 der beigefügten Ansprüche zur Verfügung gestellt wird.

Das erfindungsgemäße System ermöglicht vorteilhaft die Darstellung und Identifikation von dynamischen Abbildungen auf der Erdoberfläche und/ oder im erdnahen Luftraum. Da die Marker von den Vehikeln des Systems dynamisch ausgebildet werden, können deren Position und Formation im Raum, und in weiterer Folge die Abbildung selbst, beliebig und dynamisch verändert werden. Das erfindungsgemäße System ist folglich vorteilhaft nicht mehr nur für Himmelskörper einsetzbar und die kommerzielle Einsetzbarkeit und der Nutzen für mögliche Benutzer wird erheblich verbessert. Außerdem ermöglicht das erfindungsgemäße System eine Vielzahl von zusätzlichen Informationen zu ermitteln und zu verarbeiten, die einerseits aus der Bewegung der Vehikel, also aus der Bewegung der Marker und andererseits aus der Bewegung und Perspektive der Benutzer her, ableitbar sind. Insbesondere, wenn die Ausführung der Software am Endgerät des Benutzers, diese Informationen (Position, Bewegung, Nutzung uvam.) zu einer Datensammlungsstelle (etwa die Leitstelle oder eine Internet-Datenbank in der "Cloud" etc.) kommuniziert. Diese genauen Momentaufnahmen über die Verteilung der Benutzer in einem geographischen Bereich lässt sich sinnvoll weiter nutzen, um etwa im Katastrophenfall einen konkreten Hilfseinsatz zu planen (Zeit und Ort der potentiell gefährdeten Benutzer ist bekannt). Durch diese Datensammlung wird eine Vielzahl weiterer Datennutzungsmodelle ermöglicht, wie beispielsweise "Crowd-Management", gezielte Bespielung der Nutzer mit für ihre Position und Situation geeigneten Informationen und vieles mehr.

In einer vorteilhaften Ausgestaltung der Erfindung ist die Datenverarbeitungseinheit des tragbaren Geräts bei der Verarbeitung der Aufnahmen dazu ausgebildet, die Aufnahmen, insbesondere die identifizierten dynamischen Marker, mit vordefinierten, insbesondere dynamischen und/ oder dreidimensionalen, grafischen Elementen zu überlagern, zu kombinierten und/ oder zu ersetzten, wobei sich die grafischen Elemente auf einer Speichereinheit des tragbaren Gerätes befinden und/ oder mittels einer Kommunikationseinheit des tragbaren Gerätes an die Datenverarbeitungseinheit übermittelt werden, und wobei die Datenverarbeitungseinheit zur Abgabe der so verarbeiteten Aufnahmen an das Anzeigemittel des Systems ausgebildet ist. Die auf dem Anzeigemittel des Systems dargestellten Abbildungen können auf diese Weise vorteilhaft verändert und/ oder erweitert werden.

In einer weiteren vorteilhaften Ausgestaltung der Erfindung weist das System eine Leitstelle auf, wobei die Leitstelle zur Steuerung der Steuereinheiten der Vehikel ausgebildet ist, wobei die Vehikel und die Leitstelle Kommunikationseinheiten zur gegenseitigen Kommunikation aufweisen. Die dynamischen Marker und infolge auch die veränderbare geometrische Abbildung können so zentral von der Leitstelle gesteuert und gegebenenfalls in Echtzeit verändert werden. Hierzu kann die Leitstelle zusätzlich eine Benutzerschnittstelle aufweisen.

Bevorzugt ist die Leitstelle dazu ausgebildet, die grafischen Elemente an das tragbare Gerät zu übermitteln. Die auf dem Anzeigemittel des Systems dargestellten Abbildungen können auf diese Weise zentral von der Leitstelle gesteuert und gegebenenfalls verändert werden.

In einer vorteilhaften Ausgestaltung der Erfindung ist die Datenverarbeitungseinheit des tragbaren Geräts dazu ausgebildet, anhand der identifizierten dynamischen Marker und zumindest einer Referenzabbildung die Position des tragbaren Geräts im Raum relativ zu einer Referenzposition des Systems zu ermitteln und die Verarbeitung der Aufnahmen entsprechend der ermittelten Position des tragbaren Geräts anzupassen, wobei sich die Referenzabbildung auf einer Speichereinheit des tragbaren Gerätes befindet und/ oder von der Leitstelle an die Datenverarbeitungseinheit übermittelt wird. Die auf dem Anzeigemittel des Systems dargestellten Abbildungen können auf diese Weise vorteilhaft an die Position des tragbaren Geräts, angepasst werden, beispielsweise um die Perspektive eines Benutzers, der das tragbare Gerät benutzt, in Bezug auf die Vehikel, also in Bezug auf die dynamische Abbildung im Raum, zu berücksichtigen.

Bevorzugt weist das tragbare Gerät das Anzeigemittel auf und ist als ein Gerät zur Telekommunikation, insbesondere als ein Smartphone, und/ oder als ein Gerät zur Darstellung von Virtual-Reality Inhalten oder Augmented-Reality Inhalten, insbesondere als eine VR-Brille, oder AR-Brille, ausgebildet. Die auf dem Anzeigemittel des Systems dargestellten Abbildungen können auf diese Weise, insbesondere in einer VR-Umgebung oder AR-Umgebung, vorteilhaft direkt für einen Benutzers, der das tragbare Gerät trägt, dargestellt werden, wobei beispielsweise auch die Perspektive des Benutzers in Bezug auf die Vehikel, also in Bezug auf die dynamische Abbildung im Raum berücksichtigt werden kann.

Bevorzugt weist zumindest eines der Vehikel eine Vehikelausgestaltung, ausgewählt aus der folgenden Gruppe, auf: unbemanntes Luftfahrzeug, insbesondere eine Drohne, ein Ballon oder ein Luftschiff, unbemanntes Wasserfahrzeug, insbesondere eine Wasserdrohne, eine Unterwasserdrohne oder eine marine Boje, unbemanntes Landfahrzeug, insbesondere ein Roboterfahrzeug. Auf diese Weise können mittels der Vehikel, also mittels der dynamischen Marker, alle möglichen Abbildungen auf der Erdoberfläche und/ oder im erdnahen Luftraum dargestellt werden.

In einer weiteren vorteilhaften Ausgestaltung ist die Datenverarbeitungseinheit des tragbaren Geräts dazu ausgebildet, die Aufnahmen, insbesondere die identifizierten dynamischen Marker, und/ oder die verarbeiteten Aufnahmen einer Abbildung mit einer allgemeinen Referenzabbildung und/ oder mit individualisierten Referenzabbildungen, insbesondere individualisierten Codes, zu vergleichen, wobei sich die allgemeine Referenzabbildung und/oder die individualisierten Referenzaufnahmen auf einer Speichereinheit des tragbaren Gerätes befinden und/ oder mittels der Kommunikationseinheit des tragbaren Gerätes an die Datenverarbeitungseinheit übermittelt werden. Die Aufnahmen der dynamischen Abbildungen können zum Beispiel auf diese Weise, nachdem sie mit der allgemeinen und/ oder einer individualisierten Referenzabbildung verglichen wurden, für einen Benutzer individualisierte Darstellungen auf dem Anzeigemittel des Systems auslösen.

In einer weiteren vorteilhaften Ausgestaltung ist das tragbare Gerät mittels einer Benutzerschnittstelle zur Steuerung der Steuereinheiten der Vehikel ausgebildet, wobei die Kommunikationseinheit des tragbaren Geräts zur einseitigen und/ oder gegenseitigen Kommunikation mit der/ den Kommunikationseinheit/en der Vehikel und/ oder der Leitstelle ausgebildet ist. Ein Benutzer des tragbaren Geräts kann auf diese Weise, beispielsweise über das Internet oder ein lokales drahtloses Netzwerk des Systems, Eingaben machen, also Befehle übermitteln, um die Vehikel, also die dynamischen Marker, mittels dieser Befehle zu steuern. Hierdurch entsteht unter anderem ein "Feedback-Loop" zwischen der Abbildung, also der Darstellung der Marker, und dem/ den Benutzer/n. Beispielhaft kann so eine Abstimmung über einen Sachverhalt von allen Benutzern der tragbaren Geräte, die sich im Wirkungsbereich des Systems befinden und/ oder von denen aus die Marker sichtbar sind, durchgeführt werden. Speziell geeignet ist diese Form der Anwendung für interaktive Narrationen, beispielsweise ein Augmented-Reality Theaterstück mit Publikumsbeteiligung, oder die Vermittlung von Zusatzinformationen zu Konzertveranstaltungen, Sportveranstaltungen oder Veranstaltungen im öffentlichen Raum, bei denen sich eine Vielzahl von Menschen an einem Ort, oftmals auch mit einer bestimmten Blickrichtung, aufhalten. Die Vehikel im Blickfeld der Benutzer/ Besucher erlauben die Entwicklung eines völlig neuen interaktiven und partizipativen Kommunikationsmediums mit den an diesem Ort versammelten Menschen.

Die zuvor beschriebene Aufgabenstellung wird mittels der Erfindung auch dadurch gelöst, dass ein Verfahren Darstellung und Identifikation von Markern einer geometrischen Abbildung im Raum gemäß Anspruch 10 der beigefügten Ansprüche zur Verfügung gestellt wird.

Vorzugsweise werden in einem Verfahrensschritt E), während und/ oder nach dem Verfahrensschritt D), die verarbeiteten Aufnahmen, insbesondere die identifizierten dynamischen Marker, mittels der Datenverarbeitungseinheit mit vordefinierten, insbesondere dynamischen, grafischen Elementen überlagert, kombiniert und/ oder ersetzt, wobei sich die grafischen Elemente auf einer Speichereinheit des tragbaren Gerätes befinden und/ oder mittels einer Kommunikationseinheit des tragbaren Gerätes übermittelt werden.

Weiters beansprucht die Erfindung ein Softwareprodukt das eine Datenverarbeitungseinheit eines tragbaren Geräts in einem System gemäß der Erfindung dazu veranlasst, die Verfahrensschritte D), E) und F) des Verfahrens gemäß der Erfindung durchzuführen.

Vorzugsweise befindet sich das Softwareprodukt auf einer Speichereinheit des tragbaren Gerätes.

Weitere beispielhafte Ausgestaltungen der Erfindung werde anhand der nachfolgenden Figuren beschrieben. Es zeigen jeweils in schematischer Darstellung:
Fig. 1 ein erfindungsgemäßes System gemäß einem ersten Ausführungsbeispiel;
Fig. 2 ein Vehikel eines erfindungsgemäßen Systems, wobei das Vehikel eine erste Vehikelausgestaltung als unbemanntes Luftfahrzeug aufweist;
Fig. 3 ein Vehikel eines erfindungsgemäßen Systems, wobei das Vehikel eine zweite Vehikelausgestaltung als unbemanntes Luftfahrzeug aufweist;
Fig. 4 ein tragbaren Gerät eines erfindungsgemäßen Systems, wobei das tragbare Gerät beispielhaft als Smartphone ausgebildet ist;
Fig. 5 ein erfindungsgemäßes System gemäß einem zweiten Ausführungsbeispiel.

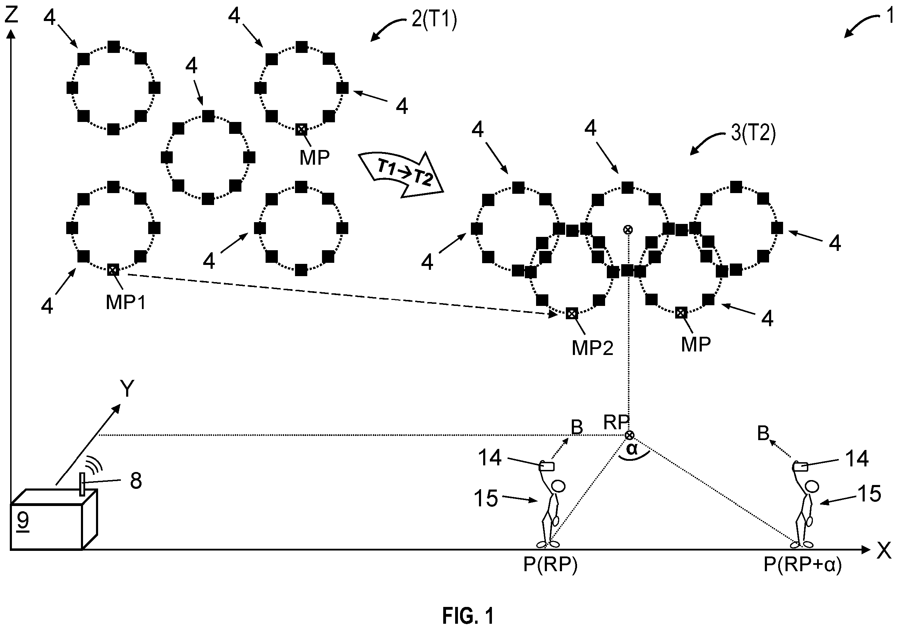

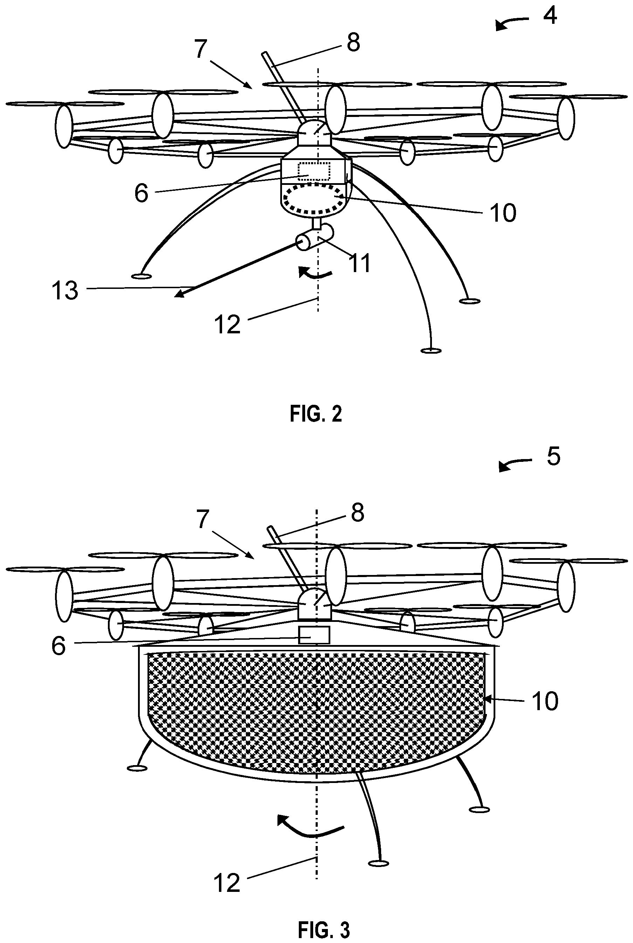

Fig. 1 zeigt ein erfindungsgemäßes System 1 zur Darstellung und Identifikation von dynamischen Markern einer veränderbaren geometrischen Abbildung 2 oder 3 im Raum, wobei der Raum durch die Raumachsen X, Y und Z dargestellt wird. Die Abbildung 2 wird zu einem ersten Zeitpunkt T1 und die Abbildung 3 zu einem zweiten Zeitpunkt T2 dargestellt. Die Abbildung 2 zum ersten Zeitpunkt T1 wird infolge der Anwendung des Systems 1 in die Abbildung 3 zum zweiten Zeitpunkt T2 überführt.

Mit "Raum" ist im Zusammenhang mit der folgenden Beschreibung ausschließlich der terrestrische Raum bezeichnet, welcher die Erdoberfläche zu/ unter Wasser und zu Land am Boden sowie den erdnahen Luftraum, im Wesentlichen die gängige Flughöhe, miteinschließt. Die dynamischen Marker beziehungswiese die veränderbare geometrische Abbildung 2 oder 3 können folglich am/ im Wasser, am Boden und/ oder in der Luft dargestellt werden.

Ein erfindungemäßes System weist zumindest drei Vehikel zur Ausbildung der dynamischen Marker auf. Damit ist eine geometrische Beziehung der Vehikel untereinander im Raum eindeutig identifizierbar und abbildbar. Alternativ können die Vehikel eines erfindungsgemäßen Systems jede mögliche Anzahl größer als drei aufweisen.

Figur 2 zeigt ein Vehikel 4 gemäß einer ersten Ausgestaltung und Figur 3 zeigt ein Vehikel 5 gemäß einer zweiten Ausgestaltung, wobei die Vehikel 4 und 5 in dem erfindungsgemäßen System 1 einsetzbar sind. Die Vehikel 4 und 5 sind als ein unbemanntes Luftfahrzeug, üblicherweise als Drohne bezeichnet, ausgebildet. Alternativ oder zusätzlich können die Vehikel des Systems 1 als ein unbemanntes Luftfahrzeug, insbesondere ein Ballon oder ein Luftschiff, ein unbemanntes Wasserfahrzeug, insbesondere eine Wasserdrohne, eine Unterwasserdrohne oder eine Marine-Boje, ein unbemanntes Landfahrzeug, insbesondere ein Roboterfahrzeug, in beliebiger Zusammensetzung ausgebildet sind.

Jedes Vehikel 4 und 5 weist eine Steuereinheit 6 zur autonomen Bewegung im Raum auf, wobei jedes Vehikel 4 oder 5 in Echtzeit gemäß einer zeitlichen Abfolge von Positionen im Raum gesteuert werden kann. Die Positionen der Vehikel sind Markerpositionen MP der dynamischen Marker zu einem bestimmten Zeitpunkt, also beispielsweise MP1 zum ersten Zeitpunkt T1. Die Markerpositionen MP können beispielsweise "Global Positioning System (GPS)"-basierte, dreidimensionale Koordinaten, also beispielsweise Daten im GPS Exchange Format (GPX) sein, wobei ein GPS-Empfänger des Vehikels 4 oder 5 zum Einsatz kommen kann. Die Daten im GPX-Format können Geodaten, also die geografischen Koordinaten Breite, Länge und Höhe, beinhalten. Alternativ können die Daten auch auf dem Galileo-, GLONASS-, Beidou/Compass- oder jedem weiteren Satellitennavigations- und/ oder Zeitgebungssystem oder auf einem lokalen oder gebäudebasierten Navigationssystem zur Positionsbestimmung des Luftfahrzeuges innerhalb und außerhalb von Gebäuden basieren (etwa Positionsbestimmung durch Übermittlung von Sendesignalen, Optische Positionsbestimmungssysteme etc.).

Mit der Steuereinheit 6 ist es somit möglich, das Vehikel 4 oder 5 mit einer bestimmten Geschwindigkeit an eine bestimmte Position im Raum oder entlang einer bestimmten Route im Raum zu steuern. Hierzu wird eine Antriebseinheit 7 von der Steuereinheit 6 entsprechend gesteuert, wobei sich die Daten zu den entsprechenden Markerpositionen MP auf einer Speichereinheit der Steuereinheit 6 befinden können.

Zusätzlich kann das Vehikel 4 oder 5 eine Kommunikationseinheit 8 aufweisen. Die Steuereinheit 6 kann so die Markerpositionen MP auch von einem externen Steuergerät, insbesondere von einer Leitstelle 9 des Systems 1, wobei die Leistelle 9 ebenfalls eine Kommunikationseinheit 8 aufweist und beispielsweise ein Laptop, ein Tablet, oder eine andere elektronische Recheneinheit sein kann, in Echtzeit empfangen, und/ oder die aktuellen Markerpositionen MP in Echtzeit an dieses externe Steuergerät schicken. Mittels der Leitstelle 9 kann die von einem Vehikel 4 oder 5 anzusteuernde Position im Raum gegebenenfalls jederzeit aktualisiert werden kann. Die Leitstelle 9 kann hierzu eine Benutzerschnittstelle, unter anderem zum Ändern der Abbildungen 2 und/oder 3 in Echtzeit, aufweisen. Die Kommunikationseinheit 8 des Vehikels 4 oder 5 kann auch dazu ausgebildet sein, mit der Kommunikationseinheit 8 eines weiteren Vehikels 4 oder 5 zu kommunizieren.

Die Vehikel 4 und 5 können zur Bildung zumindest eines räumlichen Herden- oder Schwarmverbunds gemäß einer Formation und/ oder Abbildung, beispielsweise gemäß eines Ringes der Abbildungen 2 und 3, ausgebildet sein, wobei die Leitstelle 9 ausschließlich mit einem Leitvehikel des Herden- oder Schwarmverbunds kommuniziert und die übrigen Vehikel des Herden- oder Schwarmverbunds mit dem Leitvehikel anhand der Kommunikationseinheiten 8 kommunizieren.

Die Vehikel 4 oder 5 können die dynamischen Marker als Ganzes ausbilden. Alternativ oder zusätzlich können die Vehikel 4 oder 5 Anzeigemittel 10 zur Darstellung und/ oder zur verbesserten Darstellung der dynamischen Marker aufweisen. Das Vehikel 4 gemäß der ersten Ausgestaltung weist einen Leuchtschirm als Anzeigemittel 10 auf, der beispielsweise mittels LEDs hinterleuchtet sein kann. Zusätzlich kann das Vehikel 4 ein LASER-Mittel 11 aufweisen, wobei das LASER-Mittel 11 mindestens einachsig, etwa um eine Symmetrieachse 12 des Vehikels 4, drehbar ausgebildet sein kann. Die Steuereinheit 6 kann zum Steuern der LEDs und/ oder des LASER-Mittels 11 ausgebildet sein. Alternativ oder zusätzlich können die LEDs und/ oder das LASER-Mittel 11 auch von der Leitstelle 9 gesteuert werden. Mit dem LASER-Mittel 11 können zusätzlich zu den dynamischen Marker weitere Markierungen der dynamischen Abbildung 2 oder 3, beispielsweise LASER-Linien 13 als Verbindungen zwischen einzelnen Vehikeln 4 dargestellt werden. Alternativ kann das Anzeigemittel 10 aus einer oder mehreren ein- oder mehrfarbigen LEDs, und/ oder HalogenLampe/n und/ oder Leuchtstofflampe/n ausgebildet sein.

Das Vehikel 5 gemäß der zweiten Ausgestaltung weist eine dynamische Anzeige als Anzeigemittel 10 auf, beispielsweise eine LED, OLED oder QLED-Monitor aus einzeln ansteuerbaren Bildpunkten. Die Anzeige kann mittels der Steuereinheit 6 und/ oder der Leitstelle 9 gesteuert werden.

Das System 1 weist im ersten Ausführungsbeispiel gemäß Figur 1 vierzig Vehikel 4 gemäß der ersten Ausgestaltung auf. Wird die Abbildung 2 zum ersten Zeitpunkt T1 in die Abbildung 3 zum zweiten Zeitpunkt T2 übergeführt, wird beispielsweise ein Vehikel 4 mittels der Steuereinheit 6 von einer ersten Markerposition MP1 der ersten Abbildung 2 zu einer zweiten Markerposition MP2 der zweiten Abbildung 3 bewegt. Auf diese Weise werden alle Vehikel 4 bewegt, wodurch im gezeigten Beispiel fünf beliebig angeordnete Ringe der Abbildung 2 in die bekannte Formation der olympischen Ringe der Abbildung 3 übergeführt werden. Die Abbildungen 2 und 3 werden ausschließlich durch die Vehikel 4, welche die dynamischen Marker ausbilden, dargestellt und die gestrichelten kreisförmigen Linien der Ringe in Figur 1 dienen nur zur deutlicheren Darstellung. Zusätzlich können diese gestrichelten kreisförmigen Linien der Ringe auch mittels der LASER-Linien 13 dargestellt werden.

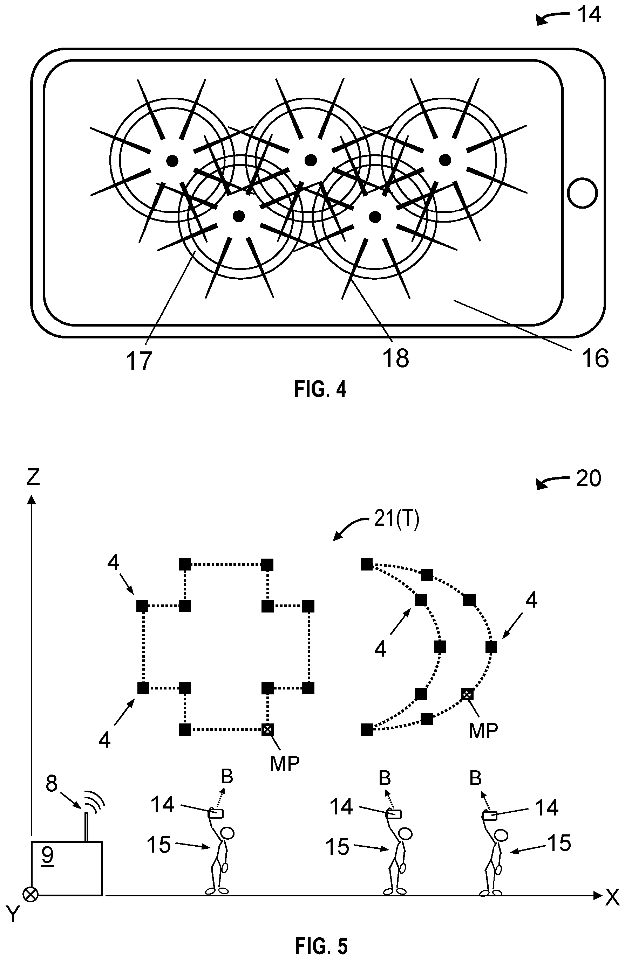

Das System 1 weist weiters zwei tragbare Geräte 14 auf, beispielsweise Smartphones, die von Benutzern 15 benutzt werden. Die tragbaren Geräte 14 weisen eine Aufnahmeeinheit (nicht dargestellt), beispielsweise eine Kamera, die zur Aufnahme der Abbildung 2 oder 3 ausgebildet ist, und eine elektronische Datenverarbeitungseinheit (nicht dargestellt) auf. Die elektronische Datenverarbeitungseinheit ist dazu ausgebildet, die dynamischen Marker anhand der Aufnahmen zu identifizieren und die Aufnahmen anhand der identifizierten Marker entsprechend zu verarbeiten. Die Datenverarbeitungseinheit ist dazu ausgebildet, die verarbeiteten Aufnahmen an ein Anzeigemittel 16 des Systems 1 abzugeben, beispielsweise gemäß Figur 4 an ein Display des tragbaren Geräts 14, das beispielhaft als Smartphone dargestellt ist. Dabei ist die Datenverarbeitungseinheit zur Abgabe der anhand der identifizierten dynamischen Marker verarbeiteten Aufnahmen der ersten Abbildung 2, der zweiten Abbildung 3, und gegebenenfalls aller gemäß einer Aufnahmegeschwindigkeit der Aufnahmeeinheit aufnehmbaren Zwischenabbildungen, ausgebildet.

"Aller gemäß einer Aufnahmegeschwindigkeit der Aufnahmeeinheit aufnehmbaren Zwischenabbildungen" bedeutet, dass beispielsweise die Aufnahmeeinheit auch einen Film vom Zeitpunkt T1 bis zum Zeitpunkt T2 aufnehmen kann, welchen Film die Datenverarbeitungseinheit im Wesentlichen in Echtzeit verarbeitet und an das Anzeigemittel 16 des Systems 1 abgibt. Die Aufnahmegeschwindigkeit der Aufnahmeeinheit bestimmt dabei die Anzahl der Abbildungen pro Sekunde oder die Anzahl der Zwischenabbildungen von T1 bis T2.

Da die Marker sich ständig dynamisch verändern, kann das tragbare Gerät 14 nicht nur eine bestimmte vordefinierte Information aus den Abbildungen 1 und 2, beziehungsweise aus den Markern zum Zeitpunkt T1 oder T2, ermitteln und verarbeiten, sondern eine Vielzahl von zusätzlichen Informationen, die aus der Bewegung der Vehikel 4, also aus der Bewegung der Marker, ableitbar sind.

Die Datenverarbeitungseinheit des tragbaren Geräts 14 kann bei der Verarbeitung der Aufnahmen dazu ausgebildet sein, die Aufnahmen, insbesondere die identifizierten dynamischen Marker, mit vordefinierten, insbesondere dynamischen und/ oder dreidimensionalen, grafischen Elementen 17 und 18 zu überlagern, zu kombinierten und/ oder zu ersetzten. Die grafischen Elemente 17 und 18 können sich auf einer Speichereinheit (nicht dargestellt) der Datenverarbeitungseinheit des tragbaren Gerätes 14 und/ oder des tragbaren Gerätes 14 befinden und/ oder mittels einer Kommunikationseinheit (nicht dargestellt) des tragbaren Gerätes 14 an die Datenverarbeitungseinheit übermittelt werden, beispielsweise von der Leitstelle 9. Die Datenverarbeitungseinheit ist zur Abgabe der so verarbeiteten Aufnahmen an das Anzeigemittel 16 ausgebildet.

Dabei wird die relative Positionierung der Vehikel 4 zueinander, also beispielsweise entsprechend der Abbildung 1 oder 2, vom tragbaren Gerät 14 mittels der am besten geeigneten Decodierungs- und/ oder Encodierungs-Technologie/Software decodiert und/ oder encodiert. "Decodierung" entspricht in diesem Fall der Identifizierung und Ermittlung der relativen Positionierung der Marker, also der Vehikel 4, oder eines Codes, der durch die relative Positionierung der Marker, also der Vehikel 4, dargestellt wird (siehe weiter unten), insbesondere mittels der Aufnahmeeinheit oder entsprechend geeigneter, dem Fachmann bekannter alternativer Sensorik des tragbaren Geräts 14. "Encodierung" entspricht in diesem Fall der Anreicherung der decodierten relativen Positionierung der Marker, also der Vehikel 4, zueinander mit Zusatzinformation, beispielsweise den grafischen Elementen 17 und 18. Dabei kann das tragbaren Gerät 14 gezielt auf Informationen, beispielsweise aus der Speichereinheit oder dem Internet, zugreifen und diese Informationen dem für die Aufnahmeeinheit des tragbaren Geräts sichtbaren Marker am Anzeigemittel 16, insbesondere das Display eines Smartphones, zuweisen, überlagern oder die Marker auch durch diese Informationen visuell ersetzen.

Alternativ oder zusätzlich kann das Anzeigemittel 16 als ein mit dem tragbaren Gerät 14 gekoppeltes oder eigenständiges Gerät zur Darstellung von Virtual-Reality Inhalten, insbesondere als eine VR-Brille, ausgebildet sein. Alternativ oder zusätzlich kann das tragbare Gerät ein Laptop-Computer, beispielsweise der Leitstelle 9 sein, und kann das Anzeigemittel 16 des Systems 1 eine große bespielbare Leinwand oder ein großer Bildschirm für alle Benutzer 15 sein. Alternativ kann das tragbare Gerät 14 auch als von einem Benutzer 15 benutzter Laptop-PC, als Tablet-PC oder als Smartwatch, insbesondere in Kombination mit einer VR-Brille, ausgebildet sein.

Zusätzlich kann die Datenverarbeitungseinheit des tragbaren Geräts 14 dazu ausgebildet sein, anhand der identifizierten dynamischen Marker und zumindest einer Referenzabbildung die Position P des tragbaren Geräts 14 im Raum relativ zu einer Referenzposition RP des Systems 1 zu ermitteln und die Verarbeitung der Aufnahmen entsprechend der ermittelten Position P des tragbaren Geräts anzupassen, wobei sich die Referenzabbildung auf der Speichereinheit des tragbaren Gerätes 14 befinden kann und/ oder von der Leitstelle 9 an die Datenverarbeitungseinheit übermittelt werden kann.

Beispielsweise bilden gemäß Figur 1 zwei Benutzer 15 mit ihren tragbaren Geräten 14 die Abbildung 3 zum Zeitpunkt T2 ab. Ein Benutzer 15 befindet sich an der Position P(RP), welche eine in etwa normale Blickrichtung B auf die Referenzposition RP des Systems 1, im vorliegenden Fall der Abbildung 3, hat. In diesem Fall identifiziert die Datenverarbeitungseinheit des tragbaren Geräts 14 dieses Benutzers 15 tatsächlich fünf in etwa kreisförmige Ringe und vergleicht diese mit der Referenzabbildung, die aus fünf kreisförmigen Ringen besteht. Die Datenverarbeitungseinheit erkennt auf diese Weise, dass sich das tragbare Gerät 14 dieses Benutzers 15 in etwa an der Position P(RP) befindet und ist dazu ausgebildet, die an das Anzeigemittel 16 abzugebende Abbildung und/ oder die zu überlagernden, zu kombinierenden und/ oder zu ersetzenden dynamischen und/ oder dreidimensionalen, grafischen Elemente 17 und 18 in Bezug auf die Blickrichtung dieses Benutzers 15 zu verarbeiten und abzugeben. Die Ringe 17 in Figur 4 werden in diesem Fall beispielsweise entsprechend der Referenzabbildung aus fünf kreisförmigen Ringen dargestellt.

Ein weiterer Benutzer 15 befindet sich an der Position P(RP+α), welche auf die Referenzposition RP des Systems 1 eine Blickrichtung B unter dem Winkel α hat. In diesem Fall identifiziert die Datenverarbeitungseinheit des tragbaren Geräts 14 dieses Benutzers 15 fünf elliptische Ringe und vergleicht diese mit der Referenzabbildung. Die Datenverarbeitungseinheit erkennt auf diese Weise, beispielsweise anhand der Form der Ellipse, dass sich das tragbare Gerät 14 dieses Benutzers 15 in etwa an der Position P(RP+α) befindet und ist dazu ausgebildet, die dynamischen und/ oder dreidimensionalen, grafischen Elementen 17 und 18 in Bezug auf die Blickrichtung dieses Benutzers 15 zu überlagern, zu kombinierten und/ oder zu ersetzten. Die Ringe 17 werden in diesem Fall entweder als Ellipsen dargestellt, oder, wie in Figur 4 gezeigt, entsprechend an die Referenzabbildung aus fünf kreisförmigen Ringen angepasst. So kann ein benutzerspezifisches oder ein für alle Benutzer 15 einheitliches Ergebnis erzielt werden.

Obige Ermittlung der Position P des tragbaren Geräts 14 im Raum relativ zu einer Referenzposition RP des Systems 1 kann weiter verbessert werden, wenn beispielsweise die genaue Position des tragbaren Geräts 14 und die genaue Referenzposition RP des Systems 1 bekannt sind, also beispielweise Entfernung und Höhenunterschied von tragbarem Gerät 14 und Referenzposition RP.

Das tragbare Gerät 14 kann eine Benutzerschnittstelle aufweisen, beispielsweise einen Touchscreen und/oder mechanische Eingabemittel, insbesondere Tasten, eines Smartphones. Mittels der Benutzerschnittstelle kann ein Benutzer 15 des tragbaren Geräts 14 zur Steuerung der Steuereinheiten 6 der Vehikel 4 ausgebildet sein, wobei die Kommunikationseinheit des tragbaren Geräts 14 zur einseitigen und/ oder gegenseitigen Kommunikation mit der/ den Kommunikationseinheit/en 8 der Vehikel 4 und/ oder der Leitstelle 9 ausgebildet ist. Dieser Benutzer 15 kann auf diese Weise, beispielsweise über das Internet oder ein lokales drahtloses Netzwerk des Systems 1, Eingaben, also Befehle, machen, um die Vehikel 4, also die dynamischen Marker, mittels dieser Befehle zu steuern. Die Befehle können direkt von dem tragbaren Gerät 14 an ein, mehrere oder alle entsprechenden Vehikel 4 oder an die Leitstelle 9 übermittelt werden. Die Leitstelle 9 kann die erhaltenen Steuerbefehle an ein, mehrere oder alle entsprechenden Vehikel 4 weiterleiten. Gegebenenfalls kann die Leitstelle 9 die Steuerbefehle zuerst verarbeiten, insbesondere in Bezug auf Ausführbarkeit und/ oder Sicherheit filtern.

In einem erfindungsgemäßen Verfahren mit dem System 1 gemäß Figur 1 werden in einem Verfahrensschritt A) die Vehikel 4 von der Leitstelle 9 zu je einer ersten Markerposition MP1 der ersten Abbildung 2 gesteuert, wobei jedes Vehikel 4 seine Markerposition MP1 zum Zeitpunkt T1 einnimmt.

In einem Verfahrensschritt B) werden die Vehikel 4 von der Leitstelle 9 zu je einer zweiten Markerposition MP2 der zweiten Abbildung 3 gesteuert, wobei jedes Vehikel 4 seine Markerposition MP2 zum Zeitpunkt T2 einnimmt.

Während der Verfahrensschritte A) und B), nehmen in einem Verfahrensschritt C) die Benutzer 15 mit den Aufnahmeeinheiten ihrer tragbaren Geräte 14 die erste Abbildung 2, die zweite Abbildung 3, und gegebenenfalls alle gemäß einer Aufnahmegeschwindigkeit der Aufnahmeeinheit aufnehmbaren Zwischenabbildungen, auf.

Während und/ oder nach dem der Verfahrensschritt C) identifiziert in einem Verfahrensschritt D) die Datenverarbeitungseinheit die dynamischen Marker anhand der Vehikel 4, beispielsweise die fünf durch die Vehikel 4 dargestellten Ringe zum Zeitpunkt T2, und verarbeitet die Aufnahmen anhand der identifizierten dynamischen Marker.

Während und/ oder nach dem der Verfahrensschritt D) überlagert, kombiniert und/ oder ersetzt in einem Verfahrensschritt E) die Datenverarbeitungseinheit die verarbeiteten Aufnahmen mit vordefinierten, insbesondere dynamischen, grafischen Elementen 17 und 18, die sich einer Speichereinheit des tragbaren Gerätes 14 befinden. Dabei ersetzt die Datenverarbeitungseinheit beispielsweise die identifizierten dynamischen Marker mit den olympischen Ringen 17 in den fünf Farben. Zusätzlich ermittelt, insbesondere animiert, die Datenverarbeitungseinheit feuerwerksähnliche dynamische Elemente 18, die durch die Ringe 17 fliegen und explodieren. Die dynamischen Elemente 18 können auch als Drachen dargestellt sein, die durch die Ringe 17 fliegen, wobei beispielsweise abhängig von der Position P eines Benutzers 15 die dynamischen Elemente 18, insbesondere die Drachen, direkt auf einen Benutzer 15 an der Position P(RP) zufliegen, oder der Benutzer 15 an der Position P(RP+α) dies von der Seite betrachtet.

In einem Verfahrensschritt F) gibt die Datenverarbeitungseinheit die gemäß den Verfahrensschritten D) und E) verarbeiteten Aufnahmen an das Anzeigemittel 16 ab.

Die Verfahrensschritt D), E) und F) können mittels einem Softwareprodukt, insbesondere einer App, die sich auf der Speichereinheit des tragbaren Geräts 14, insbesondere eines Smartphones, befindet, von der Datenverarbeitungseinheit dieses tragbaren Geräts 14 durchgeführt werden. Dabei kann das tragbare Gerät 14 mit der Leitstelle 9 kommunizieren, beispielsweise um die Referenzabbildung, die Referenzposition RP, die Position P des tragbaren Geräts 14, und/ oder die vordefinierten grafischen Elementen 17 und 18 zu erhalten.

Figur 5 zeigt ein erfindungsgemäßes System 20 zur Darstellung und Identifikation von dynamischen Markern einer veränderbaren geometrischen Abbildung 21 im Raum. Im Wesentlichen gilt für das System 20 dieselbe Beschreibung, gegebenenfalls entsprechend angepasst, wie für das System 1 und wird hier zum Zwecke der Knappheit nicht nochmals wiedergegeben. Eine erste Abbildung 21 wird zu einem Zeitpunkt T dargestellt und besteht beispielhaft aus zwei Symbolen, nämlich einem Kreuz und einem Halbmond. Eine zweite Abbildung ist in Figur 5 nicht dargestellt. Die erste Abbildung 21 kann alternativ eine Zahlenfolge oder eine Abbildungsabfolge darstellen. Die dynamischen Marker sind durch die Vehikel 4 gebildet. Alternativ oder zusätzlich können die dynamischen Marker auch durch die Vehikel 5 gebildet sein. Alternativ können die in Figur 5 am weitesten unten abgebildeten drei dynamischen Marker (zwei vom Kreuz und einer vom Halbmond) auch durch autonome Roboterfahrzeuge am Boden gebildet sein.

Die erste Abbildung könnte auch als Nullposition der Vehikel eines erfindungsgemäßen Systems ausgebildet sein, beispielsweise an der Leitstelle 9 in der Figur 5. Die Vehikel würden sich dann von dort zu einer zweiten Abbildung, beispielsweise die Abbildung 21 der Figur 5 bewegen.

Die Benutzer 15 nehmen die ersten Abbildung 21 mit den Aufnahmeeinheiten ihrer tragbaren Geräte 14, insbesondere den Kameras ihrer Smartphones, auf. Die erste Abbildung 21 stellt einen Code dar, wobei die Datenverarbeitungseinheit dazu ausgebildet ist, die Aufnahmen, insbesondere die identifizierten dynamischen Marker, und/ oder die verarbeiteten Aufnahmen der ersten Abbildung 21 mit einer individualisierten Referenzabbildung, die beispielsweise auf einer Speichereinheit des entsprechenden tragbaren Geräts 14 gespeichert ist oder in Echtzeit von der Leitstelle 9 an das tragbare Gerät 14 übermittelt wird, zu vergleichen. Stimmt die Referenzabbildung mit der verarbeiteten Aufnahme überein, werden beispielsweise individualisierte grafische Elemente auf dem Anzeigemittel 16 des Systems 20, insbesondere des entsprechenden tragbaren Geräts 14, abgegeben. Dabei kann der Code beispielsweise nur von einer Datenverarbeitungseinheit eines tragbaren Geräts 14 erkannt werden, das heißt, nur ein tragbares Gerät 14 trägt den Schlüssel zu dem Code, oder der Code wird von mehreren oder allen Datenverarbeitungseinheiten des Systems 20 erkannt, wobei dieselben oder mehrere unterschiedliche individualisierte grafische Elemente 17 und 18 abgegeben werden.

Mit einem erfindungsgemäßen System 20 und/ oder einem entsprechenden Verfahren können also mittels einer Foto- und/oder Videoaufnahme der Aufnahmeeinheit des tragbaren Geräts 14 statische und/ oder dynamische Codes entschlüsselt werden, wobei diesen Codes Visualisierungen oder Funktionen, beispielsweise das Öffnen eines Web-Links oder das Abspielen eines Videos auf dem tragbaren Gerät 14, zugeordnet werden können. Die Codes können, ähnlich wie "Augmented Reality Anwendungen" mit Barcodes oder QR-Codes, mittels einem Codierungsverfahren erzeugt sein.

Ein erfindungsgemäßes System und/ oder Verfahren kann bei der Darstellung von Kunst oder Information in der Unterhaltungsindustrie, bei öffentlichen und privaten Veranstaltungen sowie bei Gewinnspielen oder Hilfseinsätzen bereitgestellt werden. Dabei kann das erfindungsgemäße Softwareprodukt an Beobachter der Darstellung, insbesondere an deren Smartphones, übermittelt werden.

## Patentansprüche

1. System (1; 20) zur Darstellung und Identifikation von Markern einer geometrischen Abbildung im Raum, aufweisend zumindest ein tragbares Gerät (14) mit einer Aufnahmeeinheit, die zur Aufnahme der Abbildung ausgebildet ist, und einer elektronischen Datenverarbeitungseinheit, die zur Identifikation der Marker und zur Verarbeitung der Aufnahmen anhand der identifizierten Marker ausgebildet ist, **dadurch gekennzeichnet, dass**
die Marker als dynamische Marker einer im terrestrischen Raum veränderbaren geometrischen Abbildung (2, 3; 21) ausgebildet sind und dass das System (1; 20) zumindest drei Vehikel (4; 5) zur Ausbildung der dynamischen Marker aufweist, wobei jedes Vehikel (4; 5) mittels einer Steuereinheit (6) zur autonomen Bewegung im Raum ausgebildet ist, wobei die Steuereinheit (6) dazu ausgebildet ist, das Vehikel (4; 5) in einer zielgerichteten Weise zu steuern und Information in der Bewegung und/oder der Position der Marker zu codieren, wobei die Steuereinheit (6) zumindest eines Vehikels (4; 5) dazu ausgebildet ist, das Vehikel (4; 5) von einer ersten Markerposition (MP1) einer ersten Abbildung (2) zu einer zweiten Markerposition (MP2) einer zweiten Abbildung (3) zu bewegen, wobei die Datenverarbeitungseinheit zur Abgabe der anhand der identifizierten dynamischen Marker verarbeiteten Aufnahmen der ersten Abbildung (2; 21), der zweiten Abbildung (3), und gegebenenfalls aller gemäß einer Aufnahmegeschwindigkeit der Aufnahmeeinheit aufnehmbaren Zwischenabbildungen, an ein Anzeigemittel (16) des Systems (1; 20) ausgebildet ist.

2. System (1; 20) gemäß Anspruch 1, **dadurch gekennzeichnet, dass** die Datenverarbeitungseinheit des tragbaren Geräts (14) bei der Verarbeitung der Aufnahmen dazu ausgebildet ist, die Aufnahmen, insbesondere die identifizierten dynamischen Marker, mit vordefinierten, insbesondere dynamischen und/ oder dreidimensionalen, grafischen Elementen (17, 18) zu überlagern, zu kombinierten und/ oder zu ersetzten, wobei sich die grafischen Elemente (17, 18) auf einer Speichereinheit des tragbaren Geräts (14) befinden und/ oder mittels einer Kommunikationseinheit des tragbaren Gerätes (14) an die Datenverarbeitungseinheit übermittelt werden, und wobei die Datenverarbeitungseinheit zur Abgabe der so verarbeiteten Aufnahmen an das Anzeigemittel (16) des Systems (1; 20) ausgebildet ist.

3. System (1; 20) gemäß Anspruch 1 oder 2, **dadurch gekennzeichnet, dass** das System (1; 20) eine Leitstelle (9) aufweist, wobei die Leitstelle (9) zur Steuerung der Steuereinheiten (6) der Vehikel (4; 5) ausgebildet ist, wobei die Vehikel (4; 5) und die Leitstelle (9) Kommunikationseinheiten (8) zur gegenseitigen Kommunikation aufweisen.

4. System (1; 20) gemäß Anspruch 3, **dadurch gekennzeichnet, dass** die Leitstelle (9) dazu ausgebildet ist, die grafischen Elemente (17, 18) an das tragbare Gerät (14) zu übermittelten.

5. System (1; 20) gemäß Anspruch 3 oder 4, **dadurch gekennzeichnet, dass** die Datenverarbeitungseinheit des tragbaren Geräts (14) dazu ausgebildet ist, anhand der identifizierten dynamischen Marker und zumindest einer Referenzabbildung die Position (P) des tragbaren Geräts (14) im Raum relativ zu einer Referenzposition (RP) des Systems (1; 20) zu ermitteln und die Verarbeitung der Aufnahmen entsprechend der ermittelten Position (P) des tragbaren Geräts (14) anzupassen, wobei sich die Referenzabbildung auf einer Speichereinheit des tragbaren Gerätes (14) befindet und/ oder von der Leitstelle (9) an die Datenverarbeitungseinheit übermittelt wird.

6. System (1; 20) gemäß einem der vorhergehenden Ansprüche, **dadurch gekennzeichnet, dass** das tragbare Gerät (14) das Anzeigemittel (16) aufweist und als ein Gerät zur Telekommunikation, insbesondere als ein Smartphone, und/ oder als ein Gerät zur Darstellung von Virtual-Reality Inhalten oder Augmented-Reality Inhalten, insbesondere als eine VR-Brille oder AR-Brille, ausgebildet ist.

7. System (1; 20) gemäß einem der vorhergehenden Ansprüche, **dadurch gekennzeichnet, dass** zumindest eines der Vehikel (4; 5) eine Vehikelausgestaltung, ausgewählt aus der folgenden Gruppe, aufweist: unbemanntes Luftfahrzeug, insbesondere eine Drohne, ein Ballon oder ein Luftschiff, unbemanntes Wasserfahrzeug, insbesondere eine Wasserdrohne, eine Unterwasserdrohne oder eine marine Boje, unbemanntes Landfahrzeug, insbesondere ein Roboterfahrzeug.

8. System (1; 20) gemäß einem der vorhergehenden Ansprüche, **dadurch gekennzeichnet, dass** die Datenverarbeitungseinheit des tragbaren Geräts (14) dazu ausgebildet ist, die Aufnahmen, insbesondere die identifizierten dynamischen Marker, und/ oder die verarbeiteten Aufnahmen einer Abbildung (21) mit einer allgemeinen Referenzabbildung und/ oder mit individualisierten Referenzabbildungen, insbesondere individualisierten Codes, zu vergleichen, wobei sich die allgemeine Referenzabbildung und/ oder die individualisierten Referenzabbildungen auf einer Speichereinheit des tragbaren Gerätes (14) befinden und/ oder mittels einer Kommunikationseinheit des tragbaren Gerätes (14) an die Datenverarbeitungseinheit übermittelt werden.

9. System (1; 20) gemäß einem der Ansprüche 3 bis 8, **dadurch gekennzeichnet, dass** das tragbare Gerät (14) mittels einer Benutzerschnittstelle zur Steuerung der Steuereinheiten (6) der Vehikel (4; 5) ausgebildet ist, wobei die Kommunikationseinheit des tragbaren Geräts (14) zur einseitigen und/ oder gegenseitigen Kommunikation mit der/ den Kommunikationseinheit/en (8) der Vehikel (4; 5) und/ oder der Leitstelle (9) ausgebildet ist.

10. Verfahren zur Darstellung und Identifikation von Markern einer, mit einer Aufnahmeeinheit eines tragbaren Geräts (14) aufgenommenen geometrischen Abbildung (2, 3; 21) im terrestrischen Raum, wobei die Marker mit einer elektronischen Datenverarbeitungseinheit des tragbaren Geräts (14) identifiziert werden, **dadurch gekennzeichnet, dass**
die Marker als dynamische Marker von autonom im Raum bewegbaren Vehikeln (4; 5) ausgebildet sind und die folgenden Verfahrensschritte durchgeführt werden:
A) Ansteuern von zumindest drei Vehikeln (4; 5) zu je einer ersten Markerposition (MP1) einer ersten Abbildung (2; 21) mittels einer Steuereinheit (6) des Vehikels (4; 5);
B) Ansteuern von zumindest einem der Vehikel (4; 5) zu einer zweiten Markerposition (MP2) einer zweiten Abbildung (3) mittels der Steuereinheit (6) und Codieren von Information in der Bewegung und/oder der Position der Marker;
C) Während der Verfahrensschritte A) und B), Aufnehmen der ersten Abbildung (2), der zweiten Abbildung (3), und gegebenenfalls aller gemäß einer Aufnahmegeschwindigkeit der Aufnahmeeinheit aufnehmbaren Zwischenabbildungen, mittels der Aufnahmeeinheit;
D) Während und/ oder nach dem Verfahrensschritt C), Identifizieren der dynamischen Marker und Verarbeiten der Aufnahmen anhand der identifizierten dynamischen Marker mittels der Datenverarbeitungseinheit;
F) Abgeben der verarbeiteten Aufnahmen an ein Anzeigemittel (16) mittels der Datenverarbeitungseinheit.

11. Verfahren gemäß Anspruch 10, **dadurch gekennzeichnet, dass** in einem Verfahrensschritt E) während und/ oder nach dem Verfahrensschritt D), die verarbeiteten Aufnahmen, insbesondere die identifizierten dynamischen Marker, mittels der Datenverarbeitungseinheit mit vordefinierten, insbesondere dynamischen, grafischen Elementen (17, 18) überlagert, kombiniert und/ oder ersetzt werden, wobei sich die grafischen Elemente (17, 18) auf einer Speichereinheit des tragbaren Geräts (14) befinden und/ oder mittels einer Kommunikationseinheit des tragbaren Geräts (14) übermittelt werden.

12. Softwareprodukt das eine Datenverarbeitungseinheit eines tragbaren Geräts (14) in einem System (1; 20) gemäß einem der Ansprüche 2 bis 9 dazu veranlasst, die Verfahrensschritte D), E) und F) eines Verfahrens gemäß Anspruch 11 durchzuführen.

13. Softwareprodukt gemäß Anspruch 12, wobei sich das Softwareprodukt auf einer Speichereinheit eines tragbaren Geräts (14) gemäß Anspruch 6 befindet.

## Claims

1. System (1; 20) for displaying and identifying markers of a geometric image in space, having at least one portable device (14) with a recording unit, which is designed to record the image, and an electronic data processing unit, which is designed to identify the markers and to process the recordings on the basis of the identified markers, **characterised in that** the markers are designed as dynamic markers of a geometric image (2, 3; 21) which can be changed in terrestrial space, and **in that** the system (1; 20) has at least three vehicles (4; 5) for forming the dynamic markers, each vehicle (4; 5) being designed to move autonomously in space by means of a control unit (6), the control unit (6) being designed to control the vehicle (4; 5) in a targeted manner and to encode information in the movement and/or the position of the markers, wherein the control unit (6) of at least one vehicle (4; 5) is designed to move the vehicle (4; 5) from a first marker position (MP1) of a first image (2) to a second marker position (MP2) of a second image (3), wherein the data processing unit is designed to output the recordings of the first image (2; 21), the second image (3), and if applicable all intermediate images which can be recorded in accordance with a recording speed of the recording unit, processed on the basis of the identified dynamic markers, to a display means (16) of the system (1; 20).

2. System (1; 20) according to claim 1, **characterised in that** the data processing unit of the portable device (14) is designed, when processing the recordings, to superimpose, combine and/or replace the images, in particular the identified dynamic markers, with predefined, in particular dynamic and/or three-dimensional, graphic elements (17, 18), wherein the graphic elements (17, 18) are located on a memory unit of the portable device (14) and/or are transmitted to the data processing unit by means of a communication unit of the portable device (14), and wherein the data processing unit is designed to output the recordings thus processed to the display means (16) of the system (1; 20).

3. System (1; 20) according to claim 1 or 2, **characterised in that** the system (1; 20) has a control centre (9), wherein the control centre (9) is designed to control the control units (6) of the vehicles (4; 5), wherein the vehicles (4; 5) and the control centre (9) have communication units (8) for mutual communication.

4. System (1; 20) according to claim 3, **characterised in that** the control centre (9) is designed to transmit the graphic elements (17, 18) to the portable device (14).

5. System (1; 20) according to claim 3 or 4, **characterised in that** the data processing unit of the portable device (14) is designed to use the identified dynamic markers and at least one reference image to determine the position (P) of the portable device (14) in space relative to a reference position (RP) of the system (1; 20) and to adapt the processing of the recordings in accordance with the determined position (P) of the portable device (14), wherein the reference image is located on a memory unit of the portable device (14) and/or is transmitted from the control centre (9) to the data processing unit.

6. System (1; 20) according to one of the preceding claims, **characterised in that** the portable device (14) has the display means (16) and is designed as a device for telecommunications, in particular as a smartphone, and/or as a device for displaying virtual reality content or augmented reality content, in particular as VR glasses or AR glasses

7. System (1; 20) according to one of the preceding claims, **characterised in that** at least one of the vehicles (4; 5) has a vehicle configuration selected from the following group: unmanned aerial vehicle, in particular a drone, a balloon or an airship, unmanned water vehicle, in particular a water drone, an underwater drone or a marine buoy, unmanned land vehicle, in particular a robotic vehicle.

8. System (1; 20) according to one of the preceding claims, **characterised in that** the data processing unit of the portable device (14) is designed to compare the recordings, in particular the identified dynamic markers, and/or the processed recordings of an image (21) with a general reference image and/or with individualised reference images, in particular individualised codes, the general reference image and/or the individualised reference images being located on a memory unit of the portable device (14) and/or being transmitted to the data processing unit by means of a communication unit of the portable device (14).

9. System (1; 20) according to one of claims 3 to 8, **characterised in that** the portable device (14) is designed to control the control units (6) of the vehicles (4; 5) by means of a user interface, wherein the communication unit of the portable device (14) is designed for one-way and/or two-way communication with the communication unit(s) (8) of the vehicles (4; 5) and/or the control centre (9).

10. Method for displaying and identifying markers of a geometric image (2, 3; 21) recorded with a recording unit of a portable device (14) in terrestrial space, wherein the markers are identified with an electronic data processing unit of the portable device (14),
**characterised in that**
the markers are designed as dynamic markers of vehicles (4; 5) that can move autonomously in space and the following steps are carried out:
A) Controlling at least three vehicles (4; 5) each to a first marker position (MP1) of a first image (2; 21) by means of a control unit (6) of the vehicle (4; 5);
B) Controlling at least one of the vehicles (4; 5) to a second marker position (MP2) of a second image (3) by means of the control unit (6) and encoding information in the movement and/or the position of the markers;
C) During steps A) and B), recording the first image (2), the second image (3) and, if applicable, all intermediate images that can be recorded in accordance with a recording speed of the recording unit, by means of the recording unit;
D) During and/or after step C), identifying the dynamic markers and processing the recordings using the identified dynamic markers by means of the data processing unit;
F) Outputting the processed recordings to a display means (16) by means of the data processing unit.

11. Method according to claim 10, **characterised in that** in a method step E) during and/or after the method step D), the processed recordings, in particular the identified dynamic markers, are superimposed, combined and/or replaced with predefined, in particular dynamic, graphic elements (17, 18) by means of the data processing unit, the graphic elements (17, 18) being located on a memory unit of the portable device (14) and/or being transmitted by means of a communication unit of the portable device (14).

12. Software product that causes a data processing unit of a portable device (14) in a system (1; 20) according to any one of claims 2 to 9 to perform method steps D), E) and F) of a method according to claim 11.

13. Software product according to claim 12, wherein the software product is located on a storage unit of a portable device (14) according to claim 6.

## Revendications

1. Système (1; 20) d'affichage et d'identification de marqueurs d'une image géométrique dans l'espace, comprenant au moins un dispositif portable (14) avec une unité d'enregistrement conçue pour enregistrer l'image et une unité électronique de traitement de données conçue pour identifier les marqueurs et pour traiter les enregistrements sur la base des marqueurs identifiés, **caractérisé en ce que**
les marqueurs sont conçus comme marqueurs dynamiques d'une image géométrique (2, 3; 21) variable dans l'espace terrestre et que le système (1; 20) comporte au moins trois véhicules (4; 5) pour former les marqueurs dynamiques, chaque véhicule (4; 5) étant conçu pour un mouvement autonome dans l'espace au moyen d'une unité de contrôle (6), l'unité de contrôle (6) étant conçue pour contrôler le véhicule (4; 5) d'une manière ciblée et pour coder des informations dans le mouvement et/ou la position des marqueurs, la l'unité de contrôle (6) d'au moins un véhicule (4; 5) étant conçue pour déplacer le véhicule (4; 5) d'une première position de marqueur (MP1) d'une première image (2) à une deuxième position de marqueur (MP2) d'une deuxième image (3), la unité de traitement de données étant conçue pour délivrer les enregistrements de la première image (2; 21), de la deuxième image (3) et éventuellement de toutes les images intermédiaires pouvant être enregistrées selon une vitesse d'enregistrement de l'unité d'enregistrement, qui sont traités sur la base des marqueurs dynamiques identifiés, à un moyen d'affichage (16) du système (1; 20).

2. Système (1; 20) selon la revendication 1, **caractérisé en ce que** l'unité de traitement de données du dispositif portable (14) est conçue, lors du traitement des enregistrements, pour superposer, combiner et/ou remplacer les enregistrements, en particulier les marqueurs dynamiques identifiés, avec des éléments graphiques (17, 18) prédéfinis, qui sont, en particulier, dynamiques et/ou tridimensionnels, les éléments graphiques (17, 18) étant situés sur une unité de stockage du dispositif portable (14) et/ou étant transmis à l'unité de traitement de données au moyen d'une unité de communication du dispositif portable (14), et l'unité de traitement de données étant conçue pour délivrer les enregistrements ainsi traités au moyen d'affichage (16) du système (1; 20).

3. Système (1; 20) selon la revendication 1 ou 2, **caractérisé en ce que** le système (1; 20) comporte un centre de commande (9), le centre de commande (9) étant conçu pour contrôler les unités de contrôle (6) des véhicules (4; 5), les véhicules (4; 5) et le centre de commande (9) comportant des unités de communication (8) pour la communication mutuelle.

4. Système (1; 20) selon la revendication 3, **caractérisé en ce que** le centre de commande (9) est conçu pour transmettre les éléments graphiques (17, 18) au dispositif portable (14).

5. Système (1; 20) selon la revendication 3 ou 4, **caractérisé en ce que** l'unité de traitement de données du dispositif portable (14) est conçue pour déterminer la position (P) du dispositif portable (14) dans l'espace par rapport à une position de référence (RP) du système (1; 20) sur la base des marqueurs dynamiques identifiés et au moins d'une image de référence et pour ajuster le traitement des enregistrements en fonction de la position (P) déterminée du dispositif portable (14), l'image de référence étant située sur une unité de stockage du dispositif portable (14) et/ou étant transmise du centre de commande (9) à l'unité de traitement de données.

6. Système (1; 20) selon l'une des revendications précédentes, **caractérisé en ce que** le dispositif portable (14) comporte le moyen d'affichage (16) et est conçu en tant qu'un dispositif pour télécommunication, en particulier en tant qu'un smartphone, et/ou en tant qu'un dispositif de représentation de contenu de réalité virtuelle ou de contenu de réalité augmentée, en particulier en tant que lunettes VR ou lunettes AR.

7. Système (1; 20) selon l'une des revendications précédentes, **caractérisé en ce qu'**au moins un des véhicules (4; 5) présente une configuration de véhicule choisie dans le groupe suivant: véhicule aérien sans pilote, en particulier un drone, un ballon ou un dirigeable, véhicule nautique sans pilote, en particulier un drone marin, un drone sous-marin ou une bouée marine, véhicule terrestre sans pilote, en particulier un véhicule robotisé.

8. Système (1; 20) selon l'une des revendications précédentes, **caractérisé en ce que** l'unité de traitement de données du dispositif portable (14) est conçue pour comparer les enregistrements, en particulier les marqueurs dynamiques identifiés, et/ou les enregistrements traités d'une image (21) avec une image de référence générale et/ou avec des images de référence individualisées, en particulier des codes individualisés, l'image de référence générale et/ou les images de référence individualisées étant situées sur une unité de stockage du dispositif portable (14) et/ou étant transmises à l'unité de traitement de données au moyen d'une unité de communication du dispositif portable (14).

9. Système (1; 20) selon l'une des revendications 3 à 8, **caractérisé en ce que** le dispositif portable (14) est conçu, au moyen d'une interface utilisateur, pour contrôler les unités de contrôle (6) des véhicules (4; 5), l'unité de communication du dispositif portable (14) étant conçue pour une communication unilatérale et/ou mutuelle avec l'unité (les unités) de communication (8) des véhicules (4; 5) et/ou du centre de commande (9).

10. Procédé d'affichage et d'identification de marqueurs d'une image géométrique (2, 3; 21) dans l'espace terrestre, enregistrée avec une unité d'enregistrement d'un dispositif portable (14), dans lequel les marqueurs sont identifiés avec une unité électronique de traitement de données du dispositif portable (14), **caractérisée en ce que**
les marqueurs sont conçus comme des marqueurs dynamiques de véhicules (4; 5) déplaçables dans l'espace de manière autonome et les étapes du procédé suivantes sont réalisées:
A) commander au moins trois véhicules (4; 5) vers chacune une première position de marqueur (MP1) d'une première image (2 ; 21) au moyen d'une unité de contrôle (6) du véhicule (4; 5);
B) commander au moins l'un des véhicules (4; 5) vers une deuxième position de marqueur (MP2) d'une deuxième image (3) au moyen de l'unité de contrôle (6) et coder des informations dans le mouvement et/ou la position des marqueurs;
C) au cours des étapes du procédé A) et B), enregistrer la première image (2), la deuxième image (3) et éventuellement toutes les images intermédiaires pouvant être enregistrées selon une vitesse d'enregistrement de l'unité d'enregistrement, au moyen de l'unité d'enregistrement;
D) au cours de et/ou après l'étape du procédé C), identifier les marqueurs dynamiques et traiter les enregistrements sur la base des marqueurs dynamiques identifiés au moyen de l'unité de traitement de données;
F) délivrer les images traitées à un moyen d'affichage (16) au moyen de l'unité de traitement de données.

11. Procédé selon la revendication 10, **caractérisé en ce que**, dans une étape du procédé E) au cours de et/ou après l'étape du procédé D), les enregistrements traités, en particulier les marqueurs dynamiques identifiés, sont superposés, combinés et/ou remplacés avec des éléments graphiques (17, 18) prédéfinis, qui sont, en particulier, dynamiques, au moyen de l'unité de traitement de données, les éléments graphiques (17, 18) étant situés sur une unité de stockage du dispositif portable (14) et/ou étant transmis au moyen d'un unité de communication du dispositif portable (14).

12. Programme d'ordinateur qui conduit une unité de traitement de données d'un dispositif portable (14) dans un système (1; 20) selon l'une des revendications 2 à 9 à mettre en œuvre les étapes du procédé D), E) et F) d'un procédé selon la revendication 11.

13. Programme d'ordinateur selon la revendication 12, dans lequel le programme d'ordinateur est situé sur une unité de stockage d'un dispositif portable (14) selon la revendication 6.
